# EUROPEAN PATENT APPLICATION

(11) **EP 2 110 743 A1**
(43) Date of publication of application: **21.10.2009**
(21) Application number: 09250631.0
(22) Date of filing: 05.03.2009
(51) Int. Cl.: G06F 9/50, H04L 29/08

(54) **Label-based target host configuration for a server load balancer**

(30) Priority: 15.04.2008 US 103475
(71) Applicant: Juniper Networks, Inc., Sunnyvale, CA 94089-1206 (US)
(72) Inventor: Chang, Thomas C., Lexington, MA 02421 (US); Malmskog, Steven A., San Jose California 95125 (US)
(74) Representative: Harris, Ian Richard

(57) **Abstract**

A method for configuring a server load balancer comprises receiving a user command defining a load balancing group capable of representing a plurality of target host servers within a network, and receiving user commands adding the target host servers to the load balancing group, wherein the user commands include configuration information for the target host servers. Upon receiving the user commands adding the target host servers to the load balancing group, the method includes updating a database of the server load balancer to include configuration information for the target host servers. After updating the database, the method includes receiving user commands assigning a label to a subset of the target host servers without creating a new load balancing group and without re-configuring information relating to the target host servers, wherein the label indicates the subset of the target host servers are capable of servicing a specific type of access request.

## Description

### TECHNICAL FIELD

The invention relates to computer networks and, more particularly, to server load balancing within computer networks.

### BACKGROUND

A computer network is a collection of interconnected computing devices that can exchange data and share resources. In a packet-based network, the computing devices communicate data by dividing the data into small blocks called packets, which are individually routed across the network from a source device to a destination device. The destination device extracts the data from the packets and assembles the data into its original form.

Server load balancers are network devices that distribute incoming network traffic among multiple backend target host servers. In a conventional configuration, rules configured on a server load balancer cause the server load balancer to parse the incoming network traffic to direct one portion of the traffic to one subset of the target host servers, direct another portion of traffic to another subset of the target hosts, and so on. For example, separate subsets of the target host servers may serve image requests, portable document format (PDF) requests, Joint Photographic Experts Group (JPEG) requests, Graphics Interchange Format (GIF) requests, and all other hyper-text markup language (HTML) requests.

Various method of configuring the subsets of target host servers on a server load balancer have been proposed. For example, in one method, separate target host server group entities for serving different types of traffic are created, and an overall load balancing group entity is also created. The target host server groups are then associated with the overall load balancing group. Rules are configured that specify how traffic should be routed to the target host server groups. This method requires setting up multiple separate entities (i.e., the separate target host groups and the overall load balancing group) that then must be linked with the load-balancing group.

In another example method of configuring the subsets of target host servers on a server load balancer, a single target host group entity is set up, and target hosts are subsequently added to the target host group entity. Rules are configured that specify how traffic should be routed to sub-groups of the target host group entity by individually listing the target hosts that belong to the sub-groups. In this method, information about a single target host must be duplicated each time the target host is added to a list of a sub-group. For example, if one target host is a member of multiple sub-groups (e.g., serves more than one type of traffic), the target host must be listed under multiple rules, and so the information about the target host must be entered multiple times. In addition, as new target hosts are added or outdated target hosts are removed, the rules must be updated to add the target hosts to or remove the target hosts from the sub-groups listed in the rules.

### SUMMARY

In general, techniques are described for configuring and operating a server load balancer. For example, the techniques allow for a label-based system for configuring target host servers on a server load balancer in which labels that associate the target host server with a specific type of network traffic are added to each target host server after each target host server has been added to an overall load balancing group.

A server load balancer is configured by a user, such as a network administrator, to enable the server load balancer to load balance network traffic across a plurality target host servers based on the type of network traffic. The server load balancer utilizes a label-based configuration scheme in order to perform the load balancing. The network administrator interacts with the server load balancer by providing user commands to server load balancer to configure target host servers on server load balancer. To configure the target host servers on server load balancer such that server load balancer knows where to send different types of traffic, the network administrator first provides a user command that sets up an overall load balancing group. The load balancing group is a single entity defined to represent a plurality of target host servers. Upon receiving the user command, the server load balancer updates a database to define the load balancing group. The administrator then provides user commands to individually add each of target host servers to the load balancing group. When adding one of target host servers to the load balancing group, the network administrator may need to configure certain additional information about the respective target host server.

After receiving each of the plurality of user commands adding the target host servers to the load balancing group, the server load balancer updates a database to define the respective target host servers in accordance with the received user commands. The server load balancer may assign a default label to each of the defined target host servers. Next, the administrator may provide user commands to server load balancer to assign one or more additional labels to one or more of target host servers. Adding a label to one of the target host servers signifies that the target host server is capable of handling a type of network traffic associated with that label. For example, the server load balancer may be configured to associate a label 'pdf' with all target host servers equipped to service PDF requests. When the administrator assigns the labels to the target host servers, the administrator need not re-enter all of the initial information that was entered when configuring the target host servers.

In this manner, the administrator may simulate creation of target host groups for different types of network traffic, such as network access requests, e.g., file requests or requests for services. For example, requests for different types of files may be load balanced across target hosts within different target host groups (e.g., a PDF target host group, a Joint Photographic Experts Group (JPEG) target host group, and a Graphics Interchange Format (GIF) target host group) without having to actually separately configure any target host groups or explicitly add the target host servers to different target host groups, which would require that information about a target host server be re-entered each time the target host server was added to a target host group. Similarly, different types of network access requests or requests for services (e.g., a print request, a Dynamic Host Configuration Protocol (DHCP) request, or other request) may be load balanced across different subsets of target hosts, such as print servers or DHCP servers.

The label-based configuration technique described herein allows for server load balancer to associate target host servers with different types of network traffic without requiring that information about the target host servers be entered multiple times. The administrator can create as many labels as are required for the load balancing purposes of the given server load balancer. The administrator may then write custom rules containing the label names to direct certain types of network traffic to the labeled target host servers.

When the server load balancer receives network traffic, such as a request for a file from one of a plurality of client devices via a network, the server load balancer identifies the type of file being requested based on the request. The server load balancer then accesses the stored rules to determine what label applies to the type of file being requested. The server load balancer then load balances the file request across a subset of the target host servers associated with the label by selecting one of target host servers having the label, and outputting the file to the selected one of the target host servers. In this manner, the server load balancer may load balance network traffic of different types across different subsets of the group of target host servers according to the labels.

The invention may provide one or more advantages. For instance, the techniques may allow for efficiency in configuring target host servers on the server load balancer. For example, the administrator need only configure a single top-level entity, i.e., the load balancing group. If the deployment of a target host server changes, the administrator merely has to change the label associated with that target host server. It may be easier to change labels than to move an entire target host server configuration from one target host server group to another.
Various respective aspects of the present invention are set out in the appended claims.

In one embodiment, a method for configuring and operating a server load balancer comprises receiving, with a server load balancer within a network, a user command defining a load balancing group capable of representing a plurality of target host servers within the network, receiving, with the server load balancer, a plurality of user commands adding the plurality of target host servers to the load balancing group, wherein the plurality of user commands includes configuration information for the target host servers, upon receiving each of the plurality of user commands adding the plurality of target host servers to the load balancing group, updating a database of a control unit of the server load balancer to include respective configuration information with respect to each of the target host servers in accordance with the received user commands for load balancing network traffic across the target host servers.

The method further includes, after updating the database to include the configuration information, receiving with the server load balancer a plurality of user commands assigning a label to each of at least a subset of the plurality of target host servers within the earlier defined load balancing group, updating the configuration information within the database to assign the label to each target host server within the subset of the plurality of target host servers without requiring creation of a new load balancing group within the database and without requiring re-configuring the configuration information within the database relating to the target host servers to which the label is assigned, wherein the label indicates that the subset of the plurality of target host servers are capable of servicing a specific type of access request. The method further includes receiving an access request from a client device, identifying a type of the access request, accessing a set of stored rules to determine a label corresponding to the identified type of access request, accessing the configuration information within the database to identify the subset of target host servers associated with the determined label, and load balancing the access request across the plurality of target host servers by selecting one of the subset of the target host servers associated with the determined label and outputting the access request to the selected target host server.

In another embodiment, server load balancer comprises a user interface configured to receive a user command defining a load balancing group capable of representing a plurality of target host servers within a network, and receive a plurality of user commands adding the plurality of target host servers to the load balancing group, wherein the plurality of user commands includes configuration information for the target host servers. The server load balancer further includes a database to store configuration information, a set of rules that reference labels each associated with a subset of the plurality of target host servers that are capable of servicing specific types of requests for network traffic, a control unit to update the database to include respective configuration information with respect to each of the target host servers in accordance with the received user commands for load balancing network traffic across the target host servers, wherein upon the control unit updating the database to include the configuration information. The user interface receives a plurality of user commands assigning a label to each of at least a subset of the plurality of target host servers within the earlier defined load balancing group without requiring creation of a new load balancing group within the database and without requiring re-configuring the configuration information within the database relating to the target host servers to which the label is assigned, wherein the label indicates that the subset of the plurality of target host servers are capable of servicing a specific type of request for network traffic.

The server load balancer also includes an interface configured to receive a request for network traffic from a client device. The control unit identifies a type of the request for network traffic, accesses the set of rules to determine a label corresponding to the identified type of request for network traffic, and accesses the configuration information within the database to identify the subset of target host servers associated with the determined label. The control unit load balances the request for network traffic across the plurality of target host servers by selecting one of the target host servers associated with the determined label and outputting the request to the selected target host server.

In yet another embodiment, a computer-readable medium contains instructions. The instructions cause a programmable processor to receive, with a server load balancer within a network, a user command defining a load balancing group capable of representing a plurality of target host servers within the network, and receive, with the server load balancer, a plurality of user commands adding the plurality of target host servers to the load balancing group, wherein the plurality of user commands includes configuration information for the target host servers. Upon receiving each of the plurality of user commands adding the plurality of target host servers to the load balancing group, the instructions cause the programmable processor to update a database of a control unit of the server load balancer to include respective configuration information with respect to each of the target host servers in accordance with the received user commands for load balancing network traffic across the target host servers.

Upon updating the database to include the configuration information, the instructions cause the programmable processor to receive with the server load balancer a plurality of user commands assigning a label to each of at least a subset of the plurality of target host servers within the earlier defined load balancing group, and update the configuration information within the database to assign the label to each target host server within the subset of the plurality of target host servers without requiring creation of a new load balancing group within the database and without requiring re-configuring the configuration information within the database relating to the target host servers to which the label is assigned, wherein the label indicates that the subset of the plurality of target host servers are capable of servicing a specific type of access request. The instructions cause the programmable processor to receive an access request from a client device, identify a type of the access request, access a set of stored rules to determine a label corresponding to the identified type of access request, access the configuration information within the database to identify the subset of target host servers associated with the determined label, and load balance the access request across the plurality of target host servers by selecting one of the subset of the target host servers associated with the determined label and outputting the access request to the selected target host server.

In a further embodiment, a system comprises a plurality of client devices that forward requests for network traffic, a plurality of target host servers that provide network traffic to the plurality of client devices, wherein each of the plurality of target host servers is configured to service at least one type of request for network traffic, a server load balancer that receives the requests for network traffic from the plurality of client devices and load balances the requests across the plurality of target host servers according to the type of request for network traffic, wherein the server load balancer comprises: a user interface configured to receive a user command defining a load balancing group capable of representing a plurality of target host servers within a network, and receive a plurality of user commands adding the plurality of target host servers to the load balancing group, wherein the plurality of user commands includes configuration information for the target host servers.

The server load balancer further includes a database to store configuration information, a set of rules that reference labels each associated with a subset of the plurality of target host servers that are capable of servicing specific types of requests for network traffic, a control unit to update the database to include respective configuration information with respect to each of the target host servers in accordance with the received user commands for load balancing network traffic across the target host servers, wherein upon the control unit updating the database to include the configuration information. The user interface receives a plurality of user commands assigning a label to each of at least a subset of the plurality of target host servers within the earlier defined load balancing group without requiring creation of a new load balancing group within the database and without requiring re-configuring the configuration information within the database relating to the target host servers to which the label is assigned, wherein the label indicates that the subset of the plurality of target host servers are capable of servicing a specific type of request for network traffic.

The server load balancer also includes an interface configured to receive a request for network traffic from a client device. The control unit identifies a type of the request for network traffic, accesses the set of rules to determine a label corresponding to the identified type of request for network traffic, and accesses the configuration information within the database to identify the subset of target host servers associated with the determined label. The control unit load balances the request for network traffic across the plurality of target host servers by selecting one of the target host servers associated with the determined label and outputting the request to the selected target host server.

The details of one or more embodiments of the invention are set forth in the accompanying drawings and the description below. Other features, objects, and advantages of the invention will be apparent from the description and drawings, and from the claims.

### BRIEF DESCRIPTION OF DRAWINGS

FIG. 1 is a block diagram illustrating an exemplary system having a server load balancer that load balances network traffic received from client devices across a plurality of target host servers in accordance with the principles of the invention.

FIG. 2 is a block diagram illustrating an exemplary server load balancer such as the server load balancer of FIG. 1 in further detail.

FIGS. 3 and 4 are flowcharts illustrating exemplary operation of a server load balancer in accordance with the techniques described herein.

FIG. 5 is an exemplary command line interface presented by a server load balancer as viewed on a user interface.

### DETAILED DESCRIPTION

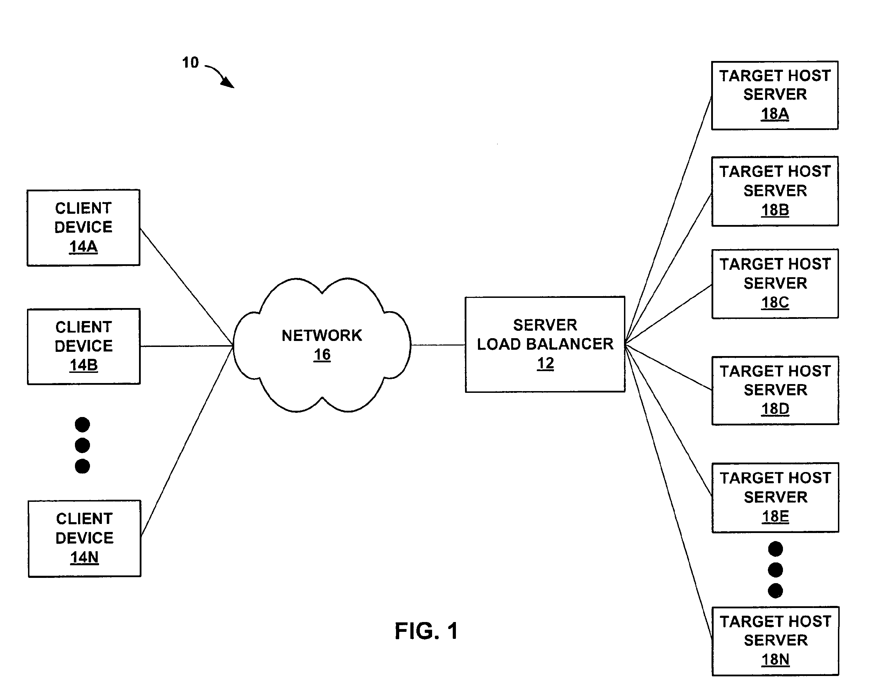

FIG. 1 is a block diagram illustrating an exemplary system 10 having a server load balancer 12 that receives file requests from client devices 14A-14N ("client devices 14") via a computer network 16. Server load balancer 12 may be configured in accordance with the techniques described herein so as to load balance the received file requests across a set of target host servers 18A-18N ("target host servers 18"). Client devices 14 may be any device capable of accessing a network, such as a laptop, a desktop computer, a workstation, a cellular phone, or a network-enabled personal digital assistant (PDA). Server load balancer 12 is a network device that operates within system 10 and is capable of remote configuration. Examples include routers, switches, hubs, application servers, database servers or other network devices. Network 16 may comprise any public or private network or the Internet.

Each of target host servers 18 may be designated for handling certain types of network traffic or types of access requests. For example, target host servers 18A, 18B, and 18C may be designated to handle HTML requests and JPEG images, and target host servers 18D, 18E, and 18N may be designated to handle HTML requests and PDF files. In addition, target host servers 18C and 18D may be designated to also handle GIF files. Server load balancer 12 is configured by a user, such as a network administrator, to enable server load balancer to load balance network traffic across target host servers 18 based on the type of network traffic or type of network access request. For example, as described in further detail below, a server load balancer 12 utilizes a label-based configuration scheme in order to perform the load balancing.

A network administrator interacts with server load balancer 12 by providing user commands to server load balancer 12 to configure the target host servers 18 on server load balancer 12. For example, the network administrator may provide the user commands via a command line interface of server load balancer 12. As another example, the network administrator may provide the user commands via a web browser-based interface presented by server load balancer 12.

To configure the target host servers 18 on server load balancer 12 such that server load balancer 12 knows where to send different types of traffic, the network administrator first provides a user command that sets up an overall load balancing group. The load balancing group is a single entity defined to represent a plurality of target host servers 18. Upon receiving the user command, server load balancer 12 updates a database to define the load balancing group. The administrator then provides user commands to individually add each of target host servers 18A-18N to the load balancing group. When adding one of target host servers 18 to the load balancing group, the network administrator may need to configure certain additional information about the respective target host server 18, such as a maximum number of connections the target host server 18 can handle. For example target host server 18A may be a more powerful server than target host server 18B, and may therefore be capable of handling a greater number of connections than target host server 18B.

After receiving each of the plurality of user commands adding the target host servers 18 to the load balancing group, server load balancer 18 updates a database to define the respective target host servers 18 in accordance with the received user commands. Server load balancer 12 assigns a default label to each of the defined target host servers 18. The default label may be the same for each of the target host servers 18. If the administrator does not create any additional labels, then server load balancer 12 load balances received network traffic across all of the target host servers 18, i.e., all target host servers 18 having the default label.

The administrator may provide user commands to server load balancer 12 to assign one or more labels to one or more of target host servers 18 on a per-target host server basis. In the example of FIG. 1, by three separate user commands, administrator assigns label 'jpg' to target host servers 18A, 18B, and 18C. Similarly, by three separate user commands, administrator assigns label 'pdf' to target host servers 18D, 18E, and 18N. The administrator may also assign label 'gif' to target host servers 18C and 18D, by two separate user commands. When the administrator assigns the labels, the administrator need not re-enter all of the initial information that was entered when configuring the target host servers 18.

The assignment of labels to target host servers 18 described above is illustrated in Table 1, below. Table 1 is provided for purposes of illustration; server load balancer 12 may or may not maintain such a data structure in configuration data.

**Table 1**

| **Target Host Server** | **Labels** | | |
|---|---|---|---|
| 18A | default | jpg | |
| 18B | default | jpg | |
| 18C | default | jpg | gif |
| 18D | default | pdf | gif |
| 18E | default | pdf | |
| 18N | default | pdf | |

In this manner, the administrator may use the assignment of labels to target host servers to simulate creation of target host groups for different types of network traffic (e.g., a PDF target host group, a JPEG target host group, and a GIF target host group) without having to actually separately configure any target host groups or explicitly add the target host servers to different target host groups, which would require that configuration information about a target host server be re-entered each time the target host server was added to a target host group. Here, the term "group" is used to refer to a logical representation of a collection of items to which individual items can be added, and in which at the time of adding an individual item to a group, characteristics of the item being added are specified. The label-based configuration technique described herein allows for target host servers 18 to be associated with different types of network traffic without requiring information about the target host servers 18 to be entered multiple times.

Server load balancer 12 maintains a set of rules that specify how particular types of network traffic are to be directed to target host servers 18. The rules are custom rules defined based on the assigned labels, i.e., the rules refer to the label names. As one example, a rule may be expressed as follows: {If a URL of a client request ends with 'jpg', then route the client request to a target host server having label 'jpg'. The administrator may configure the set of rules on server load balancer 12, and may add or remove rules from the set of rules. Since the rules are written in terms of the labels and not in terms of specific target host servers, when a new target host server is added to system 10, the administrator need not modify the rules. Instead, the administrator merely adds the new target host server to the overall load balancing group, and assigns one or more labels to the new target host server.

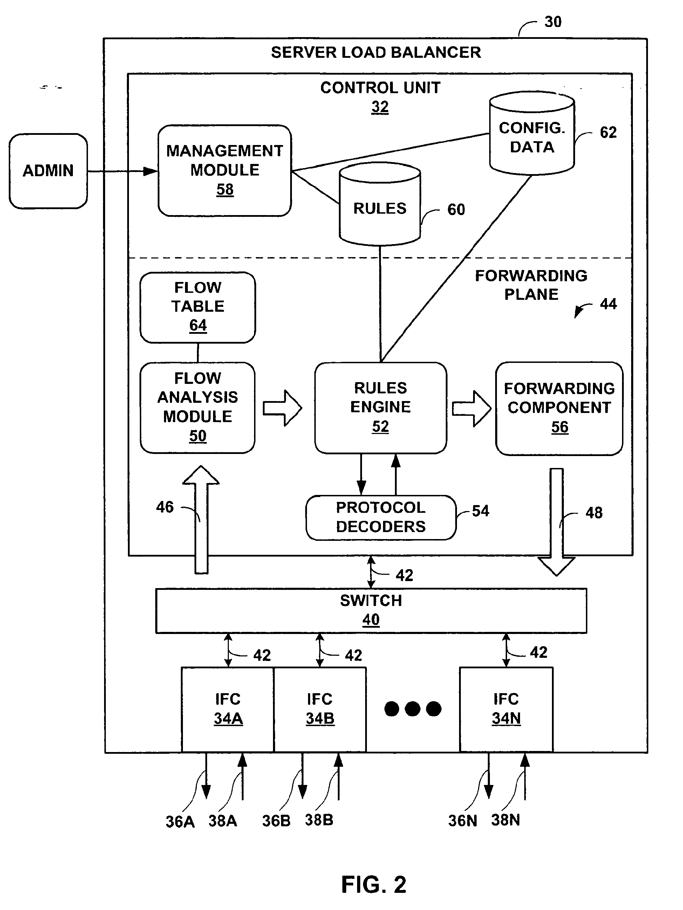

Server load balancer 12 may receive a request for a file from one of client devices 14 via network 16, for example, a request from client device 14B for a PDF file. Upon receiving the request for the PDF file, server load balancer 12 identifies the type of file being requested based on the request. For example, server load balancer 12 may extract application data from the request and inspect the application data to identify a file extension for the requested file (e.g., HTML, JPG, PDF). The manner in which server load balancer 12 identifies the type of file being requested is discussed in further detail below with respect to FIG. 2. Server load balancer 12 then accesses the stored rules to determine whether the file request matches any rule. If the file request does not match any of the rules, then the default label applies and server load balancer 12 load balances the file request across all of target host servers 18 by selecting one of target host servers 18 having the default label, and outputting the file request to the selected one of target host servers 18.

If the file request does match one of the rules, then server load balancer 12 determines a label identified by the matching rule, and accesses configuration data maintained by server load balancer 12 to determine a subset of target host servers 18 associated with the label. For example, assume the file request matches a rule that specifies: {If a URL of a client request ends with 'PDF', then route the client request to a target host server having label 'pdf'. Server load balancer 12 then accesses stored configuration data and determines that target host servers 18D, 18E, and 18N have label 'pdf'. Server load balancer 12 then load balances the file request across target host servers 18D, 18E, and 18N by selecting one of target host servers 18D, 18E, and 18N, and outputs the file request to the selected target host server. Server load balancer 12 may select from among the identified subset of target host servers 18 in a number of ways, such as randomly, in a round robin fashion, according to weightings (e.g., based on available bandwidth or a maximum number of connections), or other method of selection. In some cases, the set of rules may include a default rule that states that if no other rules are matched by the file request, to send to a target host server having the default label.

The term "file" is used generally to refer to any container of data permanently or temporarily stored, network addressable or individually addressed, and retrieved through a computer network, including HTTP files, PDF files, Word documents, images, media assets that may be downloaded or streamed to a client device.

The techniques of the invention may be applied to load balance many type of network traffic received by server load balancer 12. For example, in another embodiment, server load balancer 12 may utilize the techniques described herein to identify a type of access request from one of client devices 14 and load balance the access request across a plurality of target host servers 18. As one example, server load balancer 12 may identify a type of access request from one of client devices 14, and load balance an access request across Dynamic Host Configuration Protocol (DHCP) servers upon receiving a DHCP request. In a further embodiment, server load balancer 12 may identify a type of request for services (e.g., print requests) from one of client devices 14 and load balance the request for services across a plurality of target host servers 18.

FIG. 2 is a block diagram illustrating an exemplary server load balancer 30 that load balances network traffic received from client devices across a plurality of target host servers in accordance with the principles of embodiments of the invention. Server load balance 30 may, for example, represent server load balancer 12 of FIG. 1.

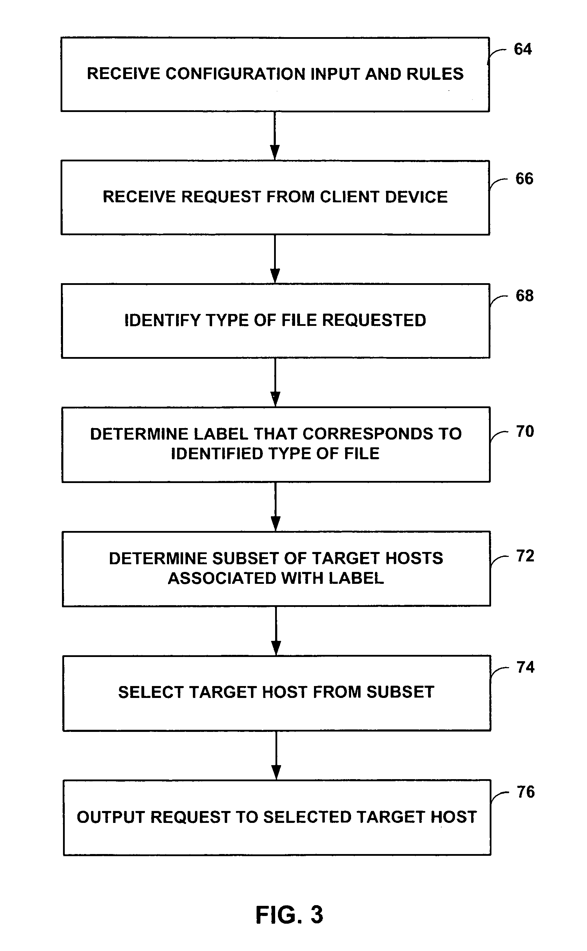

Server load balancer 30 includes a control unit 32 that determines where to send received packets and forwards the packets accordingly. In the exemplary embodiment illustrated in FIG. 3, server load balancer 30 includes interface cards (IFCs) 34A-34N (collectively, "IFCs 34") for communicating packets via outbound links 36A-36N ("outbound links 36") and inbound links 38A-38N ("inbound links 38"). IFCs 34 are interconnected by a high-speed switch 40 and links 42. In one example, switch 40 comprises switch fabric, switchgear, a configurable network switch or hub, and the like. Links 42 comprise any form of communication path, such as electrical paths within an integrated circuit, external data busses, optical links, network connections, wireless connections, or other type of communication path. IFCs 34 are coupled to outbound links 36 and inbound links 38 via a number of interface ports (not shown).

In the illustrated example, server load balancer 30 includes a forwarding plane 44 that transparently monitors inbound network traffic 46 and forwards the network traffic as outbound network traffic 48. In the example illustrated by FIG. 2, forwarding plane 44 includes flow analysis module 50, rules engine 52, protocol decoders 54, forwarding component 56. Control unit 32 of server load balancer 30 includes a management module 58. Management module 58 presents a user interface by which administrator 42 configures server load balancer 30, e.g., by modifying rules 60 or configuration data 62 (CONFIG. DATA). For example, management module 58 may present the user interface as a text-based command line interface, as a web browser-based interface, or other type of user interface.

The system administrator may configure a load balancing group and add target host servers to the load balancing group by interfacing with management module 58. The system administrator may also associate one or more labels with one or more of the target host servers. The associations may be stored to configuration data 62. As another example, the system administrator may configure rules 60. Rules 50 include rules that specify labels associated with subsets of target host servers 18 to which to forward different types of network traffic. A rule configured by the system administrator in rules 60 may specify that upon receiving packets of a particular type, control unit 32 should forward the packets to one of a subset of target host servers having a particular label. Rules engine 52 accesses rules 60 to determine whether received network traffic matches any of the rules 60. Rules 60 and configuration data 62 may be maintained in the form of one or more tables, databases, link lists, radix trees, databases, flat files, or any other data structures.

Server load balancer 30 receives network traffic from one of client devices 14, e.g., client device 14B, on one of inbound links 38A of an IFC 34. Flow analysis module 50 receives the network traffic from switch 40 as inbound traffic 46 and identifies network flows within the traffic. Each network flow represents a flow of packets in one direction within the network traffic and is identified by at least a source address, a destination address and a communication protocol. Flow analysis module 50 may utilize additional information to specify network flows, including source media access control ("MAC") address, destination MAC address, source port, and destination port. Other embodiments may use other information to identify network flows, such as IP addresses.

Flow analysis module 50 maintains data within flow table 64 that describes each active packet flow present within the network traffic. Flow table 64 specifies network elements associated with each active packet flow, i.e., low-level information such as source and destination devices and ports associated with the packet flow. In addition, flow table 64 may identify pairs of packet flows that collectively form a single communication session between a client and server. For example, flow table 64 may designate communication session as pairs of packet flows in opposite directions for flows sharing at least some common network addresses, ports and protocol.

Rules engine 52 inspects the inbound traffic to identify a type of application and invokes the appropriate one of protocol decoders 54 based on the identified type of application determination to analyze the application-layer communications. Protocol decoders 54 represent a set of one or more protocol-specific software modules. Each of protocol decoders 54 corresponds to a different communication protocol or service. Examples of communication protocols that may be supported by protocol decoders 54 include the HyperText Transfer Protocol ("HTTP"), the File Transfer Protocol ("FTP"), the Network News Transfer Protocol ("NNTP"), the Simple Mail Transfer Protocol ("SMTP"), Telnet, Domain Name System ("DNS"), Gopher, Finger, the Post Office Protocol ("POP"), the Secure Socket Layer ("SSL") protocol, the Lightweight Directory Access Protocol ("LDAP"), Secure Shell ("SSH"), Server Message Block ("SMB") and other protocols.

Protocol decoders 54 analyze reassembled application-layer communications and output transaction data that identifies application-layer transactions. In particular, the transaction data indicate when a series of related application-layer communications between two peer devices starts and ends. Rules engine 52 analyzes the reassembled data for the packet flow to identify the type of application and protocol associated with the packet flow. If rules engine 52 is unable to identify the type of application and protocol associated with the packet flow, rules engine 52 may use the well-known static port binding as a default application selection.

Rules engine 52 accesses rules 60 to determine whether any stored rules match the identified type of application and protocol associated with the packet flow. For example, rules engine 52 may identify a packet flow as an HTTP request for a PDF document. Rules engine 52 may find that such a packet flow matches a rule that states: {If a client request is an HTTP request that ends with 'PDF', then route the client request to a target host server having label 'pdf'. Rules engine 52 also accesses configuration data 62 to determine the subset of target host servers 18 having label 'pdf,' e.g., target host servers 18D, 18E, and 18N. Rules engine 52 selects one of the subset of target host servers 18 having label 'pdf,' and provides the selected one of the subset of target host servers 18 to forwarding component 56. Forwarding component 56 determines a next hop for the selected one of target host servers 18, and server load balancer 30 outputs the network traffic for the identified packet flow to the determined next hop on one of outbound links 36 of one of interface cards 34.

The architecture of server load balancer 30 illustrated in FIG. 2 is shown for exemplary purposes only. The invention is not limited to this architecture. In other embodiments, server load balancer 30 may be configured in a variety of ways. In one embodiment, for example, some of the functionality of control unit 32 may be distributed within IFCs 34. In a further embodiment, control unit 32 may include a routing engine that performs routing functions and maintains a routing information base (RIB), e.g., routing information, and a forwarding engine that performs packet forwarding based on a forwarding information base (FIB), e.g., forwarding information, generated in accordance with the RIB. Moreover, although described with respect to server load balancer 30, the forwarding techniques described herein may be applied to other types of network devices, such as gateways, switches, servers, workstations, or other network devices.

Control unit 32 may be implemented solely in software, or hardware, or may be implemented as a combination of software, hardware, or firmware. For example, control unit 32 may include one or more processors which execute software instructions. In that case, the various software modules of control unit 32 may comprise executable instructions stored on a computer-readable storage medium, such as computer memory or hard disk.

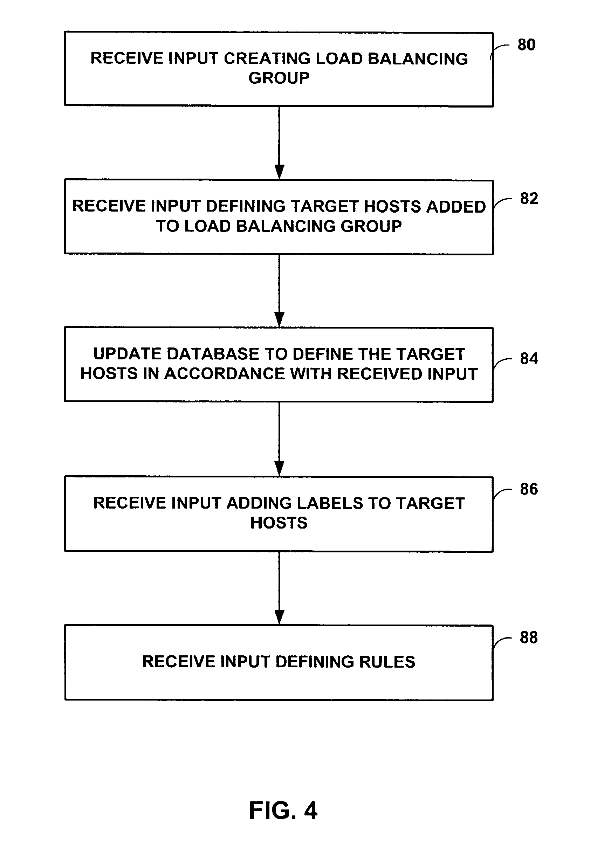

FIG. 3 is a flowchart illustrating exemplary operation of a server load balancer in accordance with the techniques described herein. For example, the server load balancer may be server load balancer 12 of FIG 1 or server load balancer 30 of FIG. 2. Server load balancer 30 receives configuration input and rules from an administrator, e.g., via a command line interface or a web browser-based user interface (64). For example, the configuration input may create a load balancing group, and may further configure individual target host servers 18A-18N as members of the overall load balancing group, and associate one or more labels with one or more of the target host servers 18. The rules specify how particular types of network traffic are to be directed to target host servers 18 based on the assigned labels. The configuration of server load balancer 30 is described in further detail below with respect to FIG. 4.

Server load balancer 30 receives a request for a file from one of client devices 14 via network 16, such as client device 14B (66). Server load balancer 30 identifies a type of file being requested based on the request, as described above with respect to FIG. 2 (68). For example, server load balancer 30 may identify the request as an HTTP request for a GIF file. Server load balancer 30 then invokes rules engine 52 to access the stored rules to determine whether the file request matches any rule, and determines a label (e.g., the label "gif") that corresponds to the identified type of file according to the rule (70). Rules engine 52 accesses configuration data 62 maintained by server load balancer 30 to determine a subset of target host servers 18 associated with the label, e.g., target host servers 18C and 18D (72). Server load balancer 30 then load balances the file request across target host servers 18C and 18D by selecting one of target host servers 18C and 18D (74) and outputting the file request to the selected target host server (76).

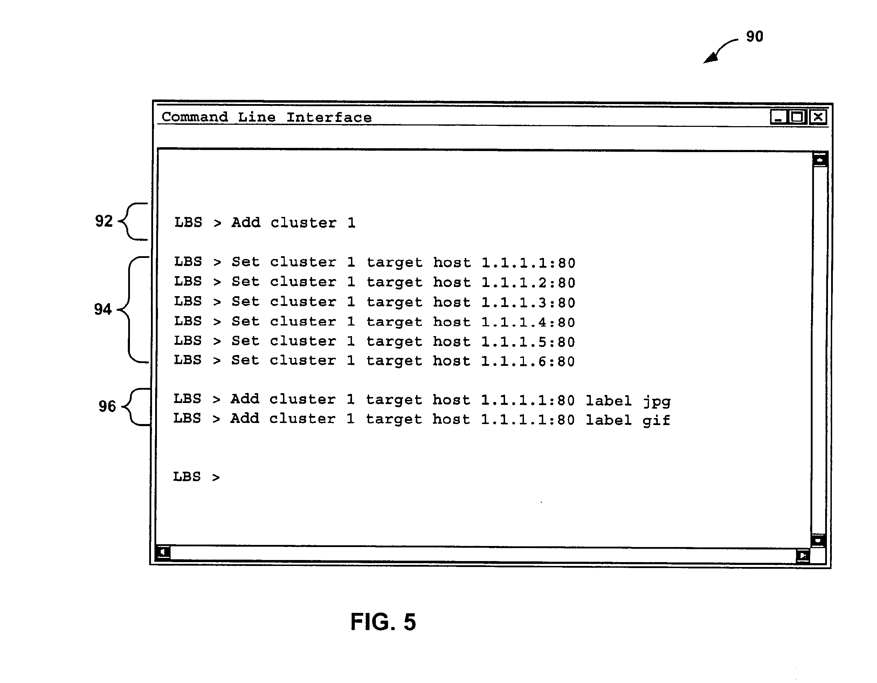

FIG. 4 is a flowchart illustrating exemplary operation of server load balancer 30 (FIG. 2) in receiving configuration information and rules from an administrator via a user interface presented by management module 58 of server load balancer 30. FIG. 4 will be described with reference to FIG. 5. FIG. 5 is an exemplary screen illustration depicting an example command line interface 90 generated by management module 58 as viewed on an interface, such as an interface presented by management module 58 of FIG. 2. In particular, command line interface 90 represents example commands entered by an administrator for configuring target host servers 18 on server load balancer 30.

Server load balancer 30 receives input from the administrator creating a load balancing group (80). For example, as shown on command line interface 90 of FIG. 5, an administrator enters a command 92 that states "Add cluster 1," where a "cluster" refers to a load balancing group. Server load balancer 30 also receives input from the administrator defining one or more target host servers 18 added to the load balancing group (82). For example, as shown on command line interface 90 of FIG. 5, an administrator enters a plurality of commands 94. Each of the commands of the plurality of commands 94 adds another target host server to the "cluster 1" load balancing group. For example, the command "Set cluster 1 target host 1.1.1.1:80" may add target host server 18A, having an IP address of 1.1.1.1 and using port 80. The command "Set cluster 1 target host 1.1.1.2:80" may add target host server 18B, and so on through target host server 18N.

After receiving each of the plurality of commands 94, server load balancer 30 updates configuration data 62 to define the respective one of target host servers 18 in accordance with the received command 94 (84). Server load balancer 30 may assign a default label to each of the target host servers 18. After updating the database to define the target hosts 18, server load balancer 30 receives input from the administrator adding labels to the target host servers 18 (86). For example, as shown on command line interface 90 of FIG. 5, an administrator enters commands 96 to add the labels "jpg" and "pdf" to target host server 18A. The administrator may add labels to other target host servers 18 by similar commands.

Although the configuration process is shown for exemplary purposes as adding all of the target host servers 18 and then adding labels to each of the target host servers 18, the administrator could alternatively add a single target host server 18A by a single command 94, and after server load balancer 30 updates configuration data 62, the administrator may next add one or more labels to target host server 18A before adding any additional target host servers 18 to the cluster 1 load balancing group. For example, the administrator may add target host server 18A to the cluster 1 load balancing group. After server load balancer 30 updates configuration data 62 to reflect the addition of target host server 18A, the administrator may next add label 'jpg' to target host server 18A. After this, the administrator may proceed to add target host server 18B to the cluster 1 load balancing group, and after server load balancer updates configuration data 62, may then add one or more labels to target host server 18B. If the deployment of a target host server changes, the administrator merely has to change the label associated with that target host server.

Server load balancer 30 also receives input from the administrator defining one or more rules, and updates rules 60 to store the defined rules (88). The administrator may also subsequently update the rules by adding, deleting, or modifying the rules. Alternatively, the administrator may define the rules before configuring the load balancing group. In this manner, the administrator may simulate creation of target host groups for different types of network traffic without having to actually separately configure any target host groups or explicitly add the target host servers to different target host groups.

Various embodiments of the invention have been described. These and other embodiments are within the scope of the following claims.

## Claims

1. A method for configuring and operating a server load balancer comprising:
receiving, with a server load balancer within a network, a user command defining a load balancing group capable of representing a plurality of target host servers within the network;
receiving, with the server load balancer, a plurality of user commands adding the plurality of target host servers to the load balancing group, wherein the plurality of user commands includes configuration information for the target host servers;
upon receiving each of the plurality of user commands adding the plurality of target host servers to the load balancing group, updating a database of a control unit of the server load balancer to include respective configuration information with respect to each of the target host servers in accordance with the received user commands for load balancing network traffic across the target host servers;
after updating the database to include the configuration information, receiving with the server load balancer a plurality of user commands assigning a label to each of at least a subset of the plurality of target host servers within the earlier defined load balancing group;
updating the configuration information within the database to assign the label to each target host server within the subset of the plurality of target host servers without requiring creation of a new load balancing group within the database and without requiring re-configuring the configuration information within the database relating to the target host servers to which the label is assigned, wherein the label indicates that the subset of the plurality of target host servers are capable of servicing a specific type of access request;
receiving an access request from a client device;
identifying a type of the access request;
accessing a set of stored rules to determine a label corresponding to the identified type of access request;
accessing the configuration information within the database to identify the subset of target host servers associated with the determined label; and
load balancing the access request across the plurality of target host servers by selecting one of the subset of the target host servers associated with the determined label and outputting the access request to the selected target host server.

2. The method of claim 1, wherein the set of stored rules reference labels each associated with a subset of the plurality of target host servers, wherein accessing the set of stored rules to determine a label comprises determining whether the request matches any of the set of stored rules, and determining a label specified by a rule matched by the request.

3. The method of claim 1 or 2, further comprising:
upon receiving each of the plurality of user commands adding the plurality of target host servers to the load balancing group entity, automatically assigning a default label to each of the plurality of target host servers; and
upon receiving an access request that does not match any rule within the set of rules, selecting one of the plurality of target host servers having a default label to which to forward the access request.

4. The method of any preceding claim, further comprising receiving a second user command assigning a second label to a second subset of the plurality of target host servers, wherein the second label associates indicates that the second subset of the plurality of target host servers are capable of servicing a second type of access request.

5. The method of any preceding claim, wherein receiving an access request comprises receiving a request for a specific type of file, and wherein the label indicates that the subset of the plurality of target host servers are capable of servicing a request for the specific type of file.

6. The method of claim 5, wherein the assigned label indicates that each of the subset of the plurality of target host servers is capable of servicing one of Hyper-Text Markup Language (HTML) requests, Portable Document Format (PDF) requests, Joint Photographic Experts Group (JPEG) requests, Graphics Interchange Format (GIF) requests, or image requests.

7. The method of any one of claims 1 to 4, wherein receiving an access request comprises receiving a request for a specific type of services, and wherein the label indicates that the subset of the plurality of target host servers are capable of servicing a request for the specific type of services.

8. The method of any preceding claim, wherein identifying the type of the access request comprises identifying an application type and a protocol type of the access request.

9. A server load balancer comprising:
a user interface configured to receive a user command defining a load balancing group capable of representing a plurality of target host servers within a network, and receive a plurality of user commands adding the plurality of target host servers to the load balancing group, wherein the plurality of user commands includes configuration information for the target host servers;
a database to store configuration information;
a set of rules that reference labels each associated with a subset of the plurality of target host servers that are capable of servicing specific types of access requests;
a control unit to update the database to include respective configuration information with respect to each of the target host servers in accordance with the received user commands for load balancing network traffic across the target host servers,
wherein upon the control unit updating the database to include the configuration information, the user interface receives a plurality of user commands assigning a label to each of at least a subset of the plurality of target host servers within the earlier defined load balancing group without requiring creation of a new load balancing group within the database and without requiring re-configuring the configuration information within the database relating to the target host servers to which the label is assigned, wherein the label indicates that the subset of the plurality of target host servers are capable of servicing a specific type of access request, and
an interface configured to receive an access request from a client device;
wherein the control unit identifies a type of the access request, accesses the set of rules to determine a label corresponding to the identified type of access request, and accesses the configuration information within the database to identify the subset of target host servers associated with the determined label, and
wherein the control unit load balances the access request across the plurality of target host servers by selecting one of the target host servers associated with the determined label and outputting the request to the selected target host server.

10. The server load balancer of claim 9 or 10, wherein upon accessing the set of rules to determine a label corresponding to the identified type of access request, the control unit is configured to determine whether the access request matches any of the set of rules, and determine a label specified by a rule matched by the request.

11. The server load balancer of claim 9 or 10, wherein upon receiving each of the plurality of user commands adding the plurality of target host servers to the load balancing group, the control unit is configured to automatically assign a default label to each of the plurality of target host servers, and
wherein upon receiving an access request that does not match any rule within the set of rules, the control unit is configured to select one of the plurality of target host servers having a default label to which to forward the access request.

12. The server load balancer of any one of claims 9 to 11, wherein the access request comprises a request for a specific type of file, and wherein the label indicates that the subset of the plurality of target host servers are capable of servicing a request for the specific type of file.

13. The server load balancer of any one of claims 9 to 12, wherein the control unit is configured to identify the type of the access request by identifying an application type and a protocol type of the access request.

14. A computer-readable medium comprising instructions for causing a programmable processor to:
receive, with a server load balancer within a network, a user command defining a load balancing group capable of representing a plurality of target host servers within the network;
receive, with the server load balancer, a plurality of user commands adding the plurality of target host servers to the load balancing group, wherein the plurality of user commands includes configuration information for the target host servers;
upon receiving each of the plurality of user commands adding the plurality of target host servers to the load balancing group, update a database of a control unit of the server load balancer to include respective configuration information with respect to each of the target host servers in accordance with the received user commands for load balancing network traffic across the target host servers;
upon updating the database to include the configuration information, receive with the server load balancer a plurality of user commands assigning a label to each of at least a subset of the plurality of target host servers within the earlier defined load balancing group;
update the configuration information within the database to assign the label to each target host server within the subset of the plurality of target host servers without requiring creation of a new load balancing group within the database and without requiring re-configuring the configuration information within the database relating to the target host servers to which the label is assigned, wherein the label indicates that the subset of the plurality of target host servers are capable of servicing a specific type of access request;
receive an access request from a client device;
identify a type of the access request;
access a set of stored rules to determine a label corresponding to the identified type of access request;
access the configuration information within the database to identify the subset of target host servers associated with the determined label; and
load balance the access request across the plurality of target host servers by selecting one of the subset of the target host servers associated with the determined label and outputting the access request to the selected target host server.

15. A system comprising:
a plurality of client devices that forward requests for network traffic;
a plurality of target host servers that provide network traffic to the plurality of client devices, wherein each of the plurality of target host servers is configured to service at least one type of request for network traffic;
a server load balancer that receives the requests for network traffic from the plurality of client devices and load balances the requests across the plurality of target host servers according to the type of request for network traffic, wherein the server load balancer comprises:
a user interface configured to receive a user command defining a load balancing group capable of representing a plurality of target host servers within a network, and receive a plurality of user commands adding the plurality of target host servers to the load balancing group, wherein the plurality of user commands includes configuration information for the target host servers;
a database to store configuration information;
a set of rules that reference labels each associated with a subset of the plurality of target host servers that are capable of servicing specific types of requests for network traffic;
a control unit to update the database to include respective configuration information with respect to each of the target host servers in accordance with the received user commands for load balancing network traffic across the target host servers,
wherein upon the control unit updating the database to include the configuration information, the user interface receives a plurality of user commands assigning a label to each of at least a subset of the plurality of target host servers within the earlier defined load balancing group without requiring creation of a new load balancing group within the database and without requiring re-configuring the configuration information within the database relating to the target host servers to which the label is assigned, wherein the label indicates that the subset of the plurality of target host servers are capable of servicing a specific type of request for network traffic, and
an interface configured to receive a request for network traffic from a client device;
wherein the control unit identifies a type of the request for network traffic, accesses the set of rules to determine a label corresponding to the identified type of request for network traffic, and accesses the configuration information within the database to identify the subset of target host servers associated with the determined label, and
wherein the control unit load balances the request for network traffic across the plurality of target host servers by selecting one of the target host servers associated with the determined label and outputting the request to the selected target host server.
